## Europäisches Patentamt

## European Patent Office

## Office européen des brevets

(11) Veröffentlichungsnummer: **0 004 031**
**B1**

(12) **EUROPÄISCHE PATENTSCHRIFT**

(45) Veröffentlichungstag der Patentschrift:
01.04.81

(51) Int. Cl.³: **C 04 B 35/56**

(21) Anmeldenummer: **79100600.0**

(22) Anmeldetag: **01.03.79**

---

(54) **Dichte polykristalline Formkörper aus alpha-Siliciumcarbid und Verfahren zu ihrer Herstellung durch drucklose Sinterung.**

---

(30) Priorität: **03.03.78 DE 2809278**

(43) Veröffentlichungstag der Anmeldung:
**19.09.79 Patentblatt 79/19**

(45) Bekanntmachung des Hinweises auf die Patenterteilung:
**01.04.81 Patentblatt 81/13**

(84) Benannte Vertragsstaaten:
**BE CH DE FR GB IT NL SE**

(56) Entgegenhaltungen:
**DE-A-2 549 637
DE-A-2 624 641
DE-B-2 314 384
FR-A-2 355 789
GB-A-1 443 158
US-A-3 966 855**

(73) Patentinhaber: **Elektroschmelzwerk Kempten GmbH, Herzog-Wilhelm-Strasse 16, D-8000 München 2 (DE)**

(72) Erfinder: **Lipp, Alfred, Dr., Bürgermeister-Singer-Strasse 15, D-8939 Bad Wörishofen (DE)**
Erfinder: **Schwetz, Karl Alexander, Dr., Bergstrasse 4, D-8961 Sulzberg (DE)**

---

Dichte polykristalline Formkörper aus alpha-Siliciumcarbid und Verfahren zu ihrer Herstellung durch drucklose Sinterung

Polykristalline Formkörper aus Siliciumcarbid sind bereits bekannt. Sie zeichnen sich durch eine Kombination wertvoller Eigenschaften aus, wie Oxidationsbeständigkeit und Temperaturwechselbeständigkeit, günstiges Kriechverhalten, relativ niedrige Dichte, geringe thermische Ausdehnung, sowie hohe Wärmeleitfähigkeit und grosse Härte. Aufgrund dieser Eigenschaften können sie daher beispielsweise als Werkstoffe für Verbrennungsrohre, Wärmeaustauschvorrichtungen oder Raketendüsen eingesetzt werden. Wegen ihrer guten mechanischen Eigenschaften finden sie ferner auf dem Gebiet der Verschleisstechnik Verwendung und wegen der Störstellen-Leitfähigkeit des Siliciumcarbids in der Elektronik und Elektrotechnik.

Es ist jedoch ebenfalls bekannt, dass sich reines Siliciumcarbid, auch unter Anwendung von Druck, nicht bis zur theoretischen Dichte von 100% verdichten lässt. Aus diesem Grunde sind bereits verschiedene Zusätze als Sinterhilfsmittel bekannt geworden, die in Abhängigkeit von dem jeweils angewendeten Verfahren zu mässig dichten bis dichten Formkörpern führen. Hohe Dichte allein ist jedoch kein ausschlaggebendes Kriterium für eine hohe Warmfestigkeit des betreffenden Formkörpers, worunter zu verstehen ist, dass eine hohe mechanische Festigkeit, zu deren Charakterisierung die Biegebruchfestigkeit dient, auch bei hohen Temperaturen, das heisst bis zu etwa 1600 °C unverändert erhalten bleibt. Eine hohe Warmfestigkeit ist aber insbesondere für die Verwendung der Formkörper als Werkstoffe im Hochtemperaturmaschinenbau, beispielsweise für Heissgasturbinen von entscheidender Bedeutung, die Arbeitstemperaturen in diesem Bereich ausgesetzt sind.

Das älteste der bekannten Verfahren zur Herstellung von dichten Siliciumcarbidformkörpern beruht auf der sogenannten Reaktionssinterung, bei dem Siliciumcarbidpulver mit Kohlenstoff und/oder einem organischen Harzbindemittel unter Bildung von vorgeformten Körpern verarbeitet wird, die anschliessend in Gegenwart einer Silicium enthaltenden Atmosphäre erhitzt werden. Der Kohlenstoff reagiert dabei mit dem Silicium unter Bildung von zusätzlichem SiC, wodurch eine Verbindung der bereits vorliegenden SiC-Körner erreicht wird. Vorhandene Löcher werden gleichzeitig mit überschüssigem Silicium ausgefüllt. Die so erhaltenen Sinterkörper weisen zwar eine sehr hohe Dichte auf, da sie praktisch porenfrei sind, aber sie enthalten freies Silicium. Ihrer Verwendung als Werkstoffe im Hochtemperaturmaschinenbau sind daher enge Grenzen gesetzt, da sie bei Temperaturen oberhalb von 1400 °C zum Ausschwitzen von Silicium (Fp. 1440 °C) neigen.

Dichte Siliciumcarbidformkörper können ferner nach dem sogenannten Heisspress- oder Durcksinterverfahren unter Verwendung von Aluminium oder Bor enthaltenden Zusätzen als Sinterhilfsmittel hergestellt werden.

So werden beispielsweise in der US-A-3 836 673 (die der DE-B-23 14 384 entspricht) dichte, heissgepresste Formkörper aus feinkörnigem $\alpha$-Siliciumcarbid beschrieben, die 0,5 bis 5 Gew.-% Aluminium enthalten, das bei der Röntgenbeugungsanalyse nicht als getrennte Phase erscheint. Diese Formkörper haben zwar bei Raumtemperatur eine Biegebruchfestigkeit von über 7000 kp/cm² (= 687 N/mm²), die jedoch mit steigender Temperatur stark abfällt und bei 1500 °C nur noch etwa 3140 kp/cm² (= 308 N/mm²) beträgt. Derartige Formkörper sind daher nicht hochwarmfest, was auch durch einen im wesentlichen interkristallinen Bruchmodus bestätigt wird.

Aus der US-A-3 853 566 (die der DE-A-23 63 036 entspricht) sind hingegen heissgepresste Formkörper aus feinkörnigem $\beta$-Siliciumcarbid bekannt, die mittels eines Bor enthaltenden Zusatzes, oder Borcarbid hergestellt worden sind. Diese Formkörper haben bei Raumtemperatur eine Biegebruchfestigkeit von nur etwa 5600 kp/cm² (= 549 N/mm²), die aber bis etwa 1400 °C unverändert bleibt und erst ab 1600 °C auf Werte unter 4000 kp/cm² (= 392 N/mm²) absinkt und der Bruchmodus ist sowohl bei Raumtemperatur als auch bei höheren Temperaturen transkristallin. Eine Zusammenstellung über Biegebruchfestigkeit und Bruchmodus der oben genannten Sinterkörper wurde von J.W. Edington et al. in «Powder Metallurgy International», vol. 7, No. 2, Seite 82 ff. (1975) vorgenommen.

Mit Hilfe des Heisspress- oder Drucksinterverfahrens können daher zwar Siliciumcarbidformkörper mit sehr geringer Porosität erhalten werden, die jedoch nicht allen Anforderungen hinsichtlich der Hochwarmfestigkeit genügen. Ausserdem sind hiermit nur relativ kleine und geometrisch einfach geformte Körper herstellbar, da die Formgebungsmöglichkeiten beim Drucksintern begrenzt sind. Darüberhinaus ist die kontinuierliche Durchführung derartiger Verfahren mit hohem Aufwand verbunden.

Versuche, das komplizierte und kostenintensive Heisspressverfahren auch bei Siliciumcarbid durch das sogenannte Drucklossinterverfahren zu ersetzen, sind deshalb ebenfalls bereits bekannt geworden. Denn dieses Verfahren erlaubt die Herstellung auch kompliziert gestalteter Formkörper ohne kostspielige und zeitraubende Nachbearbeitung, sowie die wirtschaftliche Massenproduktion von Formteilen in kontinuierlich betriebenen Durchschubsinteröfen.

Ausgehend von der Tatsache, dass die Verwendung von Bor enthaltenden Zusätzen als Sinterhilfsmittel eim Heisspressen von Siliciumcarbid Vorteile bringt, im Vergleich zu anderen Materialien, wie Aluminiumoxid oder Aluminiumnitrid, wird beispielsweise in der US-A-4 004 934 (die der DE-A 24 49 662 entspricht) ein Verfahren beschrieben, bei dem pulverförmiges $\beta$-Silicium-

carbid mit einer Bor enthaltenden Verbindung (0,3 bis 3,0 Gew.-% B) und einem Kohlenstoff enthaltenden Zusatz (0,1 bis 1,0 Gew.-% C) unter Formgebung verpresst wird und die vorgeformten Körper anschliessend in einer inerten Atmosphäre bei Temperaturen von 1900° bis 2100°C drucklos gesintert werden, unter Bildung von Formkörpern mit einer Dichte von mindestens 85% der theoretischen Dichte des Siliciumcarbids. In dieser Patentschrift wird jedoch ausgeführt, dass es zur Erzielung hoher Dichten, z.B. über 95% TD (= theoretische Dichte des Siliciumcarbids) erforderlich ist, den drucklosen Sintervorgang in Gegenwart von strömendem Stickstoff durchzuführen, da dieser die Wirkung haben soll, die Umwandlung von β-SiC in α-SiC zu unterdrücken oder zu verzögern. Diese Phasentransformation tritt im SiC bereits bei Temperaturen oberhalb von 1600°C ein und führt zu einem ausserordentlichen Kornwachstum der α-(6H)-Phase. Aufgrund dieser Umwandlung vergröbert sich das SiC-Pulver häufig schon bevor die Enddichte erreicht ist und diese Vergröberung verhindert eine weitere Verdichtung. Das Gefüge derartiger Sinterkörper besteht dann aus grossflächigen α-SiC-Kristallen, die in einer feinkörnigen β-SiC-Matrix eingebettet sind. Aufgrund dieser Gefügeinhomogenität ist aber die Festigkeit solcher Sinterkörper für die Anwendung im Hochtemperaturmaschinenbau nicht ausreichend. Zur Behebung dieses Nachteils wird in der US-A-4 041 117 (die der DE-A 26 27 856 entspricht) ein Verfahren beschrieben, bei dem β-SiC-Pulver im Gemisch mit 0,05 bis 5 Gew.-% α-SiC-Pulver, wobei die Korngrösse des α-SiC-Pulvers mindestens doppelt so gross sein muss, wie diejenige des β-SiC-Pulvers, mit Bor und Kohlenstoff enthaltenden Zusätzen, analog dem Verfahren gemäss der US-PS 4 004 934 drucklos gesintert werden. Durch den Zusatz von α-SiC in Form von Impfkristallen soll eine verbesserte Kontrolle des Kornwachstums während des Sinterns erreicht werden, da diese eine rasche Umformung des β-SiC in die thermodynamisch stabilere α-Form bewirken, so dass im fertigen Sinterkörper mindestens 70 Gew.-% des SiC in der α-Form vorliegen. Das durch diese Massnahme erzielte gleichmässigere Mikrogefüge wird jedoch auf Kosten einer geringeren Dichte des Endproduktes erkauft (maximale Dichte gemäss den Beispielen: 91,9% TD).

In dieser US-A wird ferner darauf hingewiesen, dass verschiedene Zusätze, wie Aluminium, Siliciumnitrid, Aluminiumnitrid und Bornitrid, die sich beim Heisspressen für die Kontrolle des Wachstums der tafelartigen α-SiC-Kristalle als wirksam erwiesen hatten, bei der drucklosen Sinterung nicht verwendet werden können, da sie den Verdichtungsprozess stören und das Erreichen hoher Dichten verhindern.

Nach dem in der DE-A-26 24 641 beschriebenen Verfahren soll es ferner möglich sein, dichte SiC-Formkörper durch drucklose Sinterung von α-SiC-Pulver, das leichter zugänglich ist, im Gemisch mit einem Bor und einem Kohlenstoff enthaltenden Zusatz herzustellen. Das Verfahren ist jedoch nicht auf die Verwendung von α-SiC-Pulver beschränkt, sondern umfasst in gleicher Weise auch β-SiC-Pulver, sowie Gemische aus β und α-SiC-Pulver. Die so erhaltenen Sinterkörper sollen eine Dichte von mindestens 75% TD aufweisen und neben SiC 0,5 bis 5 Gew.-% Kohlenstoff aus einem carbonisierbaren organischen Material, 0,15 bis 3 Gew.-% Bor und bis zu 1,0 Gew.-% zusätzlichen Kohlenstoff (z.B. aus Borcarbid) enthalten. Wie aus den Beispielen ersichtlich, wurden hierbei Dichten von maximal 96% TD erreicht.

Durch eigene Versuche wurde indessen nachgewiesen, dass auch bei Verwendung von α-SiC-Pulver als Ausgangsmaterial im drucklosen Verfahren mit Bor und Kohlenstoff enthaltenden Zusätzen bei hohen Sintertemperaturen übertriebenes Kornwachstum auftritt, das zu einem inhomogenen Mikrogefüge im fertigen Sinterkörper führt.

Für diese Versuche wurden Submikronpulver mit α-SiC-Anteilen von 97% und 100% verwendet, jeweils zusammen mit einem 1 Gew.-% Bor und einem 2 Gew.-% Kohlenstoff enthaltenden Zusatz. Die drucklose Sinterung wurde in Gegenwart einer Argonschutzgasatmosphäre bei Temperaturen von 2050° bis 2300°C durchgeführt. Alle so erhaltenen Sinterkörper hatten eine Dichte von etwa 96% TD, aber die bei Temperaturen ab 2100°C gesinterten Proben waren stark rekristallisiert und ihre Heissbiegefestigkeit lag unterhalb von 300 N/mm². Nur die bei 2050°C gesinterten Proben wiesen ein homogenes, feinkörniges Mikrogefüge der durchschnittlichen Korngrösse von etwa 5 μm auf.

Daraus folgt, dass die drucklose Sinterung von Siliciumcarbid mit Bor enthaltenden Zusätzen nur schwierig zu bewerkstelligen ist, wenn Sinterkörper mit sowohl hoher Dichte, als auch gleichmässigem, feinkörnigem Mikrogefüge erhalten werden sollen, da offensichtlich unabhängig von der Art des verwendeten Ausgangsmaterials (α- und/oder β-SiC) infolge der Dotierung des SiC mit Bor mit einem übertriebenen Kornwachstum zu rechnen ist, das nur durch Einhaltung ganz bestimmter Bedingungen in Grenzen gehalten werden kann. Insbesondere die Einhaltung eines eng begrenzten Temperaturbereichs stellt aber hohe Anforderungen an eine exakte Temperaturregelung, die in diesem Bereich nur schwierig durchführbar ist. Die Übertragung eines derartigen Verfahrens in den grosstechnischen Bereich ist daher mit einem unwirtschaftlich hohen Aufwand verbunden.

Es stellt sich somit die Aufgabe, polykristalline Formkörper aus Siliciumcarbid mit verbesserten Eigenschaften, insbesondere einer hohen Warmfestigkeit zur Verfügung zu stellen, die auf einfache Weise hergestellt werden können.

Die erfindungsgemässen polykristallinen Formkörper mit einer Dichte von mindestens 97% der theoretischen Dichte des Siliciumcarbids bestehen aus
mindestens 95,4 Gew.-% α-Siliciumcarbid,
0,1 bis 2,0 Gew.-% zusätzlichem

Kohlenstoff, der mindestens teilweise in freier, elementarer Form vorliegt, 0,2 bis 2,0 Gew.-% Aluminium,
bis zu 0,5 Gew.-% Stickstoff und
bis zu 0,1 Gew.-% Sauerstoff,

wobei das α-Siliciumcarbid in Form eines homogenen Gefüges mit Korngrössen von maximal 10 μm vorliegt. Sie haben eine Biegebruchfestigkeit von mindestens 500 N/mm² bis zu 1600 °C und einen transkristallinen Bruchmodus. Vorzugsweise haben sie eine Gesamtporosität von weniger als 2 Vol.-%.

In den erfindungsgemässen polykristallinen Formkörpern liegen Aluminium, sowie gegebenenfalls vorhandener Stickstoff und Sauerstoff im wesentlichen in Form einer festen Lösung im Siliciumcarbidgitter vor, so dass sie beispielsweise bis zu einer 2400fachen Vergrösserung nicht als getrennte Phase nachgewiesen werden können. Der zusätzliche Kohlenstoff kann hingegen in Form von äquiaxialen Teilchen der Korngrösse < 2 μm als getrennte Phase nachweisbar sein. Darüberhinaus sind die Formkörper bei Raumtemperatur elektrisch leitfähig, wobei diese Leitfähigkeit durch den mengenmässigen Anteil an Stickstoff variiert werden kann. Der geringe Restsauerstoffgehalt, der vorzugsweise weniger als 0,05 Gew.-% beträgt, ist für die hohe Warmfestigkeit der erfindungsgemässen Formkörper ebenfalls von entscheidender Bedeutung.

Die erfindungsgemässen polykristallinen Formkörper werden vorteilhaft aus pulverförmigem Siliciumcarbid und mindestens einem Kohlenstoff enthaltenden Zusatz durch drucklose Sinterung hergestellt. Dieses Verfahren ist dadurch gekennzeichnet, dass im wesentlichen in der α-Modifikation vorliegendes Siliciumcarbid in Pulverform mit einer Korngrösse von 3 μm und feiner mit einem Aluminium enthaltenden Zusatz in einer 0,3 bis 3 Gew.-% freiem Aluminium entsprechenden Menge, bezogen auf das Gewicht des eingesetzten Siliciumcarbids, und mit einem Kohlenstoff enthaltenden Zusatz in Form von amorphem Kohlenstoff oder einem bei Temperaturen bis zu etwa 1000 °C unter Bildung von amorphem Kohlenstoff verkokbaren organischen Material in einer 0,2 bis 3 Gew.-% freiem Kohlenstoff entsprechenden Menge, bezogen auf das Gewicht des eingesetzten Siliciumcarbids, homogen vermischt, unter Formgebung kalt verpresst wird und die so erhaltenen vorgeformten Körper mit einer Dichte von mindestens 50% der theoretischen Dichte des Siliciumcarbids anschliessend in Gegenwart einer gegenüber Siliciumcarbid inerten Atmosphäre oder im Vakuum bei einer Temperatur von 2000° bis 2300 °C bis zur Bildung der polykristallinen Formkörper gesintert werden.

Für die Durchführung des erfindungsgemässen Verfahrens wird als Ausgangsmaterial vorteilhaft ein Siliciumcarbid-Submikronpulver (Korngrösse < 1 μm) verwendet, das durch Mahlen der kompakten Körner aus der grosstechnischen SiC-Produktion (Acheson-Verfahren) und anschliessende Klassierung (Windsichten, Schlämmen) in der erforderlichen Kornfeinheit erhalten werden kann. Als Mass für die Kornfeinheit des Pulvers wird zweckmässig die spezifische Oberfläche herangezogen (gemessen nach der BET-Methode), da die Korngrösse selbst erfahrungsgemäss im Submikronbereich nicht mehr mit hinreichender Genauigkeit bestimmt werden kann. Aus der Angabe der spezifischen Oberfläche kann die mittlere Teilchengrösse gemäss der Gleichung

$$\bar{D} = \frac{6}{S \cdot \gamma}$$

$\bar{D}$ = mittlere Teilchengröße in μm
$S$ = spezifische Oberfläche in m²/g
$\gamma$ = Pulverdichte in g/cm³

annäherungsweise berechnet werden.

SiC-Pulver mit einer spezifischen Oberfläche von 5 bis 50 m²/g, insbesondere im Bereich 10 bis 20 m²/g haben sich hierbei besonders bewährt. Aufgrund der hohen Herstellungstemperatur weist das im Acheson-Prozess anfallende Siliciumcarbid im allgemeinen einen überwiegenden Prozentsatz der thermodynamisch stabileren α-Modifikation auf. Insbesondere kann durch Sortierung von kompakter Stückware aus den inneren Zonen der im Widerstandsofen nach Acheson gebildeten Siliciumcarbidwalze ein einphasiges α-SiC gewonnen werden. Ausgehend von solchen einphasigen α-SiC-Submikronpulvern werden die besten Ergebnisse erzielt, wobei eine Vorbehandlung mit Fluss- und/oder Salpetersäure zweckmässig ist, um Fremdstoffe, insbesondere anhaftende Kieselsäure und andere Sauerstoff enthaltende Verbindungen zu entfernen, die den Sintervorgang stören und/oder zu einer unerwünschten Erhöhung des Restsauerstoffgehaltes im fertigen Sinterkörper führen können.

Sowohl der Aluminium, als auch der Kohlenstoff enthaltende Zusatz in den angegebenen Mengen sind für die Durchführung des erfindungsgemässen Verfahrens von entscheidender Bedeutung, da durch eigene Vesuche nachgewiesen wurde, dass mit jeweils einem der beiden Zusätze allein nur eine sehr mangelhafte Verdichtung erzielt werden konnte.

Der Aluminium enthaltende Zusatz wird vorteilhaft in Pulverform mit einer Korngrösse von 5 μm und feiner (Mikronpulver) oder von 1 μm und feiner (Submikronpulver) eingesetzt und zwar entweder als Aluminiummetall oder als Aluminiumverbindung. Es kann jedoch auch ein mit Aluminium dotiertes Siliciumcarbidpulver verwendet werden. Als Aluminiumverbindungen haben sich Aluminiumcarbid, Aluminiumnitrid und/oder Aluminiumsiliciumcarbid bewährt. Die Verwendung oxidischer Aluminiumverbindungen, wie Aluminiumoxid ist indessen nicht vorteilhaft, da diese zu unerwünscht hohen Restsauerstoffgehalten im fertigen Sinterkörper führen können.

Der Aluminium enthaltende Zusatz wird definitionsgemäss in einer 0,3 bis 3 Gew.-% freiem Aluminium entsprechenden Menge, bezogen auf eingesetztes Siliciumcarbid, verwendet. Geringere Mengen als 0,3 Gew.-% Aluminium sind praktisch nicht mehr im gewünschten Sinne wirksam, das heisst, hiermit konnte keine ausreichende Verdichtung des Siliciumcarbids mehr erzielt werden. Grössere Mengen als 3,0 Gew.-% Aluminium bringen keinen Vorteil, da hierdurch bereits die Gefahr besteht, dass die Oxidationsbeständigkeit des Siliciumcarbids herabgesetzt wird. Die besten Ergebnisse hinsichtlich der Verdichtung werden mit Aluminium enthaltenden Zusätzen in solchen Mengen erzielt, die in Abhängigkeit von den übrigen Zusätzen und der jeweils angewendeten Sintertemperatur zu Sinterkörpern mit einem Gehalt von 0,3 bis 1,5 Gew.-% Aluminium führen.

Der Einsatz von stickstofffreien Aluminium enthaltenden Zusätzen führt zu Sinterkörpern, die bei Raumtemperatur eine sehr niedrige elektrische Leitfähigkeit aufweisen und die praktisch nur mit Aluminium dotiertes α-Siliciumcarbid enthalten. Bei Einsatz von Stickstoff enthaltenden Aluminiumverbindungen und/oder von mit Stickstoff dotiertem Siliciumcarbidpulver können hingegen Sinterkörper mit hoher elektrischer Leitfähigkeit bei Raumtemperatur erhalten werden, wobei Aluminium und Stickstoff im wesentlichen in Form einer festen Lösung im Siliciumcarbidgitter vorliegen.

Die Leitfähigkeit des Sinterkörpers kann daher durch Variation des Stickstoffgehalts im Ausgangsmaterial variiert und somit einem bestimmten Verwendungszweck jeweils genau angepasst werden, was beispielsweise für eine nachträgliche elektroerosive Bearbeitung der Sinterkörper von Vorteil ist.

Die Einführung von Stickstoff während des Sintervorgangs durch Verwendung einer Stickstoff enthaltenden Schutzgasatmosphäre hat sich indessen nicht als vorteilhaft erwiesen, da hierdurch keine mengenmässig exakte Dotierung erreicht wird und die hierbei erforderliche Erhöhung der Sintertemperatur die Durchführung des Verfahrens erschwert.

Der Kohlenstoff enthaltende Zusatz wird definitionsgemäss in Form von amorphem Kohlenstoff oder einem unter Bildung von amorphem Kohlenstoff verkokbaren organischen Material eingesetzt. Es wurde nämlich festgestellt, dass α-SiC-Pulver der grosstechnischen Produktion, das von der Herstellung her bereits einen zusätzlichen Kohlenstoffgehalt bis zu etwa 2 Gew.-% aufwies, im angegebenen Temperaturbereich bei 2000° bis 2300°C nicht über 85% TD verdichtet werden konnte, was vermutlich darauf zurückzuführen sein dürfte, dass der im Kohlenstoff-reichen α-SiC vorhandene freie Kohlenstoff in Form von Graphit vorliegt, der sowohl chemisch, als auch sintertechnisch nicht in ausreichendem Masse aktiv ist. Der für die Durchführung des erfindungsgemässen Verfahrens erforderliche Kohlenstoff enthaltende Zusatz muss daher bei Beginn des Sintervorgangs als freier Kohlenstoff in amorpher Form zur Verfügung stehen. Das kann dadurch erreicht werden, dass bereits amorpher Kohlenstoff eingesetzt wird, beispielsweise in Form von Russ, wie Acetylenruss, der vorteilhaft eine spezifische Oberfläche im Bereich von 10 bis 400 m²/g hat. Zur Erzielung guter Presseigenschaften der Russ enthaltenden Pulvergemische werden vorteilhaft geringe Mengen eines temporären Bindemittels mitverwendet. Beispiele für derartige temporäre Bindemittel sind Polyvinylalkohol, Stearinsäure und Campher. Diese Bindemittel können in Mengen bis zu etwa 1 Gew.-%, bezogen auf das Geiwcht des eingesetzten Siliciumcarbids, verwendet werden. Vorzugsweise wird jedoch der Kohlenstoff enthaltende Zusatz in Form eines organischen Materials eingesetzt, das bei Temperaturen bis zu etwa 1000°C unter Bildung von amorphem Kohlenstoff verkokt werden kann. Das Kohlenstoff enthaltende organische Material kann bei Raumtemperatur fest oder flüssig sein. Beispiele hierfür sind Phenoplaste und Steinkohlenteerpech, wobei sich Phenol-Formaldehyd-Kondensationsprodukte vom Typ der Novolake und der Resole besonders bewährt haben, die im Bereich von 100 bis 900°C unter Bildung von amorphem Kohlenstoff in etwa 35 bis 50%iger Ausbeute zersetzt werden.

Der Kohlenstoff enthaltende Zusatz wird definitionsgemäss und unabhängig von der Form in einer Menge eingesetzt, die 0,2 bis 3 Gew.-% freiem Kohlenstoff entspricht, bezogen auf das Gewicht des eingesetzten Siliciumcarbids. Geringere Mengen als 0,2% sind praktisch nicht mehr im gewünschten Sinne wirksam, d.h. hiermit konnte keine ausreichende Verdichtung des Siliciumcarbids mehr erzielt werden. Grössere Mengen als 3 Gew.-% Kohlenstoff bringen keinen Vorteil, da hierdurch bereits die Gefahr besteht, dass die Biegebruchfestigkeit bei Raumtemperatur, insbesondere aber die Hochtemperaturbiegefestigkeit der SiC-Körper herabgesetzt wird. Die besten Ergebnisse werden mit Kohlenstoff enthaltenden Zusätzen erzielt, deren Gehalt an freiem Kohlenstoff im Bereich 0,2 bis 2 Gew.-% und insbesondere bei 0,5 bis 1 Gew.-% liegt.

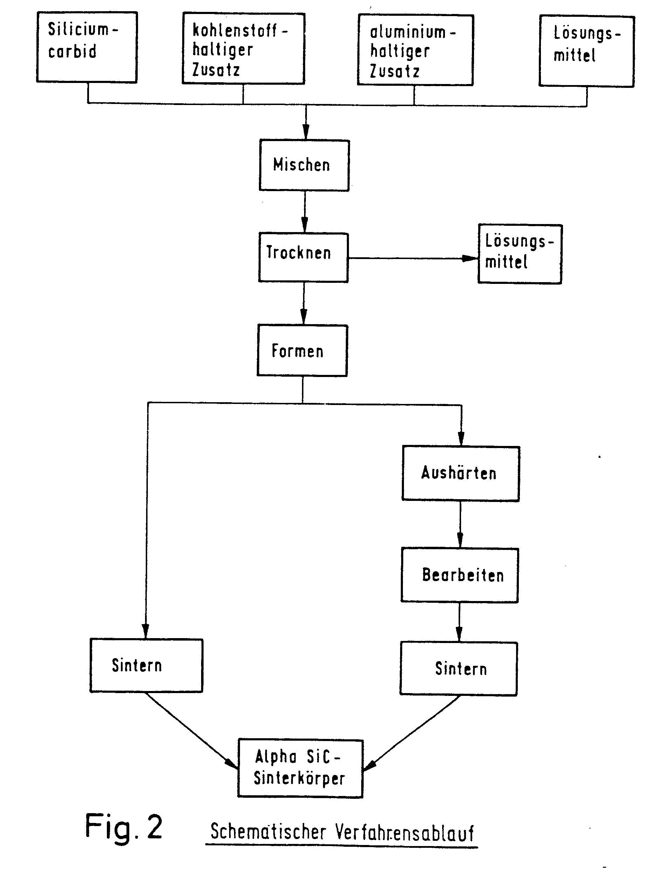

Die Durchführung des erfindungsgemässen Verfahrens kann anhand des in Abbildung 2 dargestellten schematischen Verfahrensablaufs wie folgt erläutert werden:

Zunächst wird das SiC-Pulver mit dem Aluminium und Kohlenstoff enthaltenden Zusatz homogen vermischt, was vorteilhaft dadurch erreicht wird, dass der Kohlenstoff enthaltende Zusatz in Form des organischen Materials in einem organischen Lösungsmittel gelöst und das Siliciumcarbidpulver gemeinsam mit dem pulverförmigen Aluminium enthaltenden Zusatz in der Lösung dispergiert wird. Bei Einsatz von amorphem Kohlenstoff per se wird das Siliciumcarbidpulver gemeinsam mit dem amorphen Kohlenstoff und dem Aluminium enthaltenden Zusatz in einer Lösung des temporären Bindemittels dispergiert. Als organische Lösungsmittel können beispielsweise Aceton und niedere aliphatische Alkohole mit 1 bis 6 C-Atomen Verwendung finden. Das Dispergieren kann durch mechanische Bewegung einer dünnflüssigen Suspension in Plastikbehältern unter Verwendung eines Rührers oder durch Kneten einer dickflüssigen Suspension in einer Knetvorrichtung vorgenommen werden. Nach dem Entfernen des Lösungsmittels, was beispielsweise bei einer dünnflüssigen Suspension durch Sprüh- oder Gefriertrocknung oder bei einer dickflüssigen Suspension durch Abdunsten während des Knetvorgangs erfolgen kann, wird das erhaltene homogene Pulver unter Formgebung kalt verpresst unter Bildung der vorgeformten Körper mit einer Dichte von mindestens 50% TD. Die Formgebung kann mittels üblicher bekannter Massnahmen vorgenommen werden, beispielsweise durch Gesenkpressen, isostatisches Pressen, Spritzpressen, Strangpressen oder Schlickergiessen. Beim Gesenkpressen in Matrizen, bzw. beim isostatischen Pressen wird üblicherweise ein Druck zwischen 300 bis 6000 bar, vorzugsweise zwischen 1000 bis 3000 bar angewendet. Anschliessend werden die vorgeformten Körper definitionsgemäss bei Temperaturen im Bereich von 2000 bis 2300 °C drucklos gesintert. Der angegebene Temperaturbereich ist für die Erzielung der gewünschten Eigenschaften von entscheidender Bedeutung, denn es wurde nachgewiesen, dass unter gleichen Bedingungen, jedoch bei tieferen Temperaturen, Sinterkörper mit Dichten unterhalb 90% der theoretischen Dichte erhalten werden, während bei höheren Temperaturen bereits Zersetzungserscheinungen bzw. die Sublimation des Siliciumcarbids auftreten.

Bei Einsatz des Kohlenstoff enthaltenden Zusatzes in Form des verkokbaren organischen Materials wird dieses während des Aufheizvorgangs verkokt, so dass bei Beginn des eigentlichen Sintervorgangs der Kohlenstoff in amorpher Form vorliegt. Bei Verwendung von Kohlenstoff enthaltenden Zusätzen in Form von selbstaushärtenden Resolen können die vorgeformten Körper auch in einer getrennten Verfahrensstufe zum Aushärten des Kunstharzes erwärmt werden, was insbesondere dann von Vorteil ist, wenn Sinterkörper mit geometrisch komplizierter Gestalt hergestellt werden sollen, da die vorgeformten Körper nach dem Aushärten des Kunstharzbindemittels eine grössere Festigkeit aufweisen und somit leichter mechanisch bearbeitet werden können als unmittelbar nach der Kaltverformung. Das Vorerhitzen wird vorzugsweise in einem Trockenschrank bei Temperaturen im Bereich zwischen 80 und 150 °C durchgeführt. Wenn indessen keine derartige Bearbeitung erforderlich ist und auch der Obeflächenbeschaffenheit des Endproduktes keine besondere Bedeutung zukommt, können die vorgeformten Körper auch unmittelbar nach der Kaltverformung dem Sintervorgang unterzogen werden. Dabei ist es zweckmässig, bei Festlegung der Dimensionen des Formkörpers eine bei der Sinterung eintretende Schrumpfung zu berücksichtigen. Erfahrungsgemäss sind die Dimensionen nach der Sinterung abhängig von der Dichte des vorgeformten Körpers (= Gründichte) und können hieraus in bekannter Weise berechnet werden. So ist beispielsweise ausgehend von Grünlingsdichten von etwa 62% TD des SiC eine lineare Schrumpfung von etwa 15% zu berücksichtigen.

Der Sintervorgang im angegebenen Temperaturbereich wird vorzugsweise in einem Graphitrohr-Widerstands- oder Induktionsofen durchgeführt. Für den kontinuierlichen Betrieb wird vorteilhaft ein horizontaler Durchschubofen verwendet, in dem die vorgeformten Körper durch die Heizzone des Ofens transportiert werden, und zwar derart, dass sie jeweils für eine vorgesehene Zeitspanne auf der gewünschten Temperatur gehalten werden. Das für den Sintervorgang erforderliche Temperaturprogramm (Aufheizen – Verweilen – Abkühlen) ist von der Grösse der zu sinternden Formkörper abhängig. Kleine Formkörper mit einem Gewicht von nur einigen Gramm sind im allgemeinen ziemlich unempfindlich gegenüber dem Temperaturprogramm und können rasch, das heisst in etwa 60 bis 120 Minuten bis zur Sintertemperatur erhitzt und auf dieser Temperatur etwa 15 Minuten gehalten werden. Grössere Formkörper erfordern ein längeres Aufheizprogramm, um Temperaturgradienten in den Sinterkörpern zu vermeiden. Ganz allgemein sind in Abhängigkeit von Grösse und Form der zu sinternden Körper Verweilzeiten bei der maximalen Sintertemperatur im Bereich von etwa 10 bis 60 Minuten in den meisten Fällen ausreichend zur Erzielung der gewünschten Sinterdichte von über 97% TD. Zu lange Verweilzeiten bei Sintertemperaturen im Bereich von 2250 bis 2300 °C sollten indessen nach Möglichkeit vermieden werden, da sie zu einer Vergröberung des Korngefüges im Sinterkörper führen können und damit zu einer Verschlechterung der mechanischen Festigkeitseigenschaften. Ein entscheidender Vorteil des erfindungsgemässen Verfahrens ist die Tatsache, dass ein genaues Einhalten der Sintertemperatur im Bereich von 2000 °C bis 2300 °C nicht notwendig ist, d.h. es steht im Gegensatz zu den vorbekannten Drucklossinterverfahren, die mit einem Bor- und Kohlenstoff-Zusatz arbeiten, ein breites Sinterintervall zur Verfügung, in dem die Sinterkörper mit den erwünschten Eigenschaften erhalten werden können.

Die zu sinternden vorgeformten Körper sind zweckmässig in einem inerten Behälter untergebracht, beispielsweise in einem Tiegel aus Graphit und von einer inerten Atmosphäre oder Vakuum umgeben. In Gegenwart einer inerten Atmosphäre, worunter eine gegenüber Siliciumcarbid inerte Schutzgasatmosphäre zu verstehen ist, wird der Sintervorgang vorteilhaft bei Normaldruck durchgeführt, d.h. bei einem Druck von etwa 1,01 bar. Als Schutzgasatmosphäre können Edelgase, wie Argon oder Helium, aber auch Kohlenmonoxid oder Wasserstoff, Verwendung finden. Die Sinterung der Formkörper kann jedoch auch im Vakuum durchgeführt werden, wobei sich ein Druck von ≤ 20 mbar besonders bewährt hat. Vorzugsweise wird die Sinterung der Formkörper jedoch in einer Edelgasatmosphäre bei Normaldruck durchgeführt.

Die nach dem erfindungsgemässen Verfahren hergestellten SiC-Formkörper weisen definitionsgemäss Sinterdichten von mindestens 97% TD auf, denen Restporositäten von ≦1 Vol.-% entsprechen.

Die Biegebruchfestigkeit der Sinterkörper beträgt bei Raumtemperatur mindestens 500 N/mm² und bleibt beim Temperaturanstieg bis 1600°C erhalten. Der Bruch zeigt bei allen Temperaturen transkristallines Aussehen.

Diese Ergebnisse müssen insbesondere im Hinblick auf die Tatsache, dass bisher angenommen wurde, Zusätze, wie Aluminium, Siliciumnitrid oder Aluminiumnitrid würden den Verdichtungsvorgang bei der drucklosen Sinterung von Siliciumcarbid stören und das Erreichen hoher Dichten verhindern, als überraschend bewertet werden.

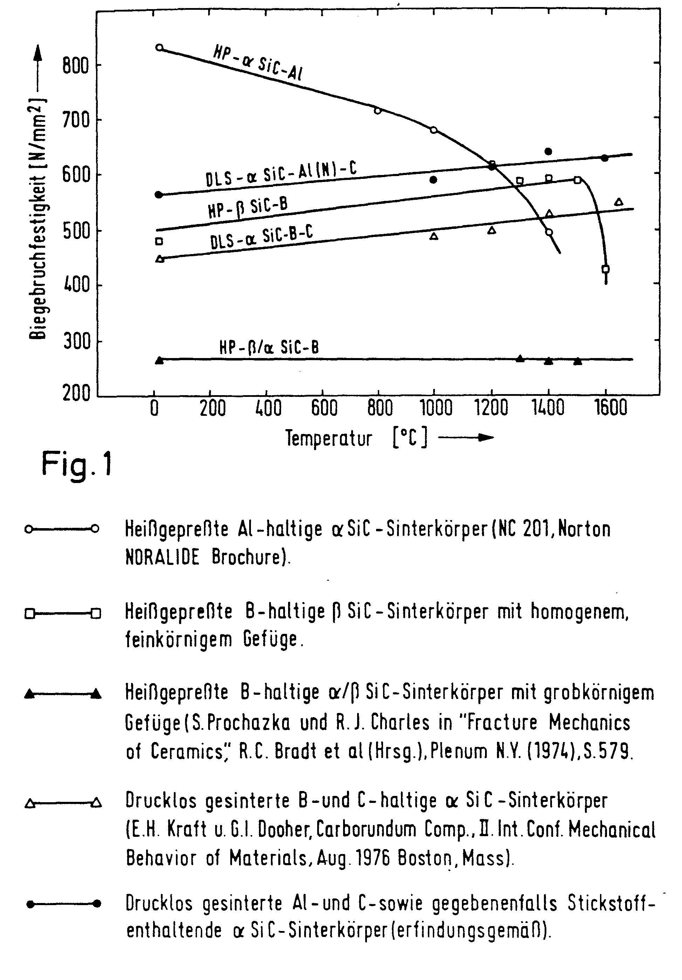

Aus der graphischen Darstellung in Abbildung 1 sind die nach dem erfindungsgemässen Verfahren erreichten Kalt- und Warmfestigkeiten im Vergleich zu denjenigen gemäss dem Stand der Technik ersichtlich.

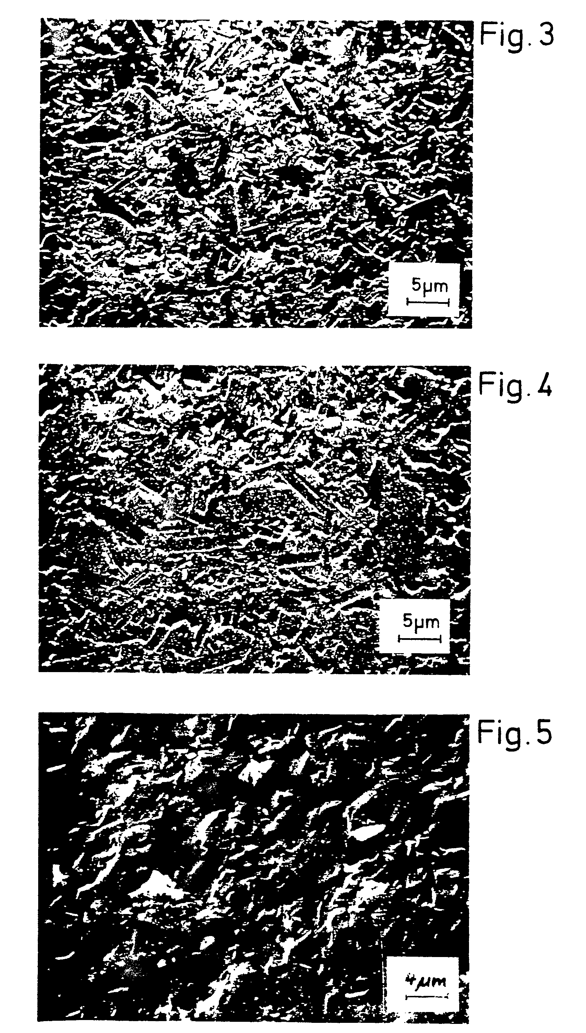

Abbildung 3 zeigt ein Gefügebild (geätzt, V = 2000fach) eines erfindungsgemäss durch Drucklossinterung von α-SiC mit 1 Gew.-% Al- und 0,75 Gew.-% C-Zusatz bei 2050°C erhaltenen Sinterkörpers. Abbildung 4 zeigt ein Gefügebild (geätzt, V = 2000fach) eines durch Drucklossinterung von α-SiC mit 1 Gew.-% Al- und 0,75 Gew.-% C-Zusatz bei 2250°C erhaltenen Sinterkörpers. Die mittlere Korngrösse beider Sinterkörper liegt unterhalb 10 μm. Es liegen prismatische SiC-Körner mit einem Formfaktor von 2:1 bis 5:1 vor.

Abbildung 5 zeigt das Rückstreuelektronenbild (V = 2400fach) einer frischen Bruchfläche eines erfindungsgemäss durch Drucklossinterung von α-SiC mit 2,5 Gew.-% AlN- und 2% Gew.-% C-Zusatz erhaltenen Sinterkörpers. Deutlich ist der transkristalline Bruchmodus und der homogen dispergierte Kohlenstoff (schwarze Phase) erkennbar.

In Tabelle 1 sind die Grenzwerte der elektrischen Widerstände bei Raumtemperatur zusammen mit den entsprechenden Al- und N-Gehalten der nach dem erfindungsgemässen Verfahren hergestellten Sinterkörper angegeben.

Tabelle 1:

| Al- bzw. N-Gehalt des SiC-Sinterkörpers Gew.-% Al    ppm N | elektrischer Widerstand bei 20°C Ω · cm |
|---|---|
| 1,25    2.500 | 1,2 |
| 0,60    <50 | >10⁴ |

Die hervorragenden Eigenschaften der nach dem erfindungsgemässen Verfahren erhaltenen Sinterkörper aus α-SiC ermöglichen ihre Verwendung im Hochtemperatur-Maschinenbau (Heissgasturbine), auf dem Sektor der Verschleisstechnik (Ziehsteine, Schneidplättchen, Gleitlager) und in der Elektrotechnik (Halbleiter, Heizkörper).

Das erfindungsgemässe Verfahren wird anhand der folgenden Beispiele näher erläutert.

Beispiel 1

Als Ausgangsmaterial wurde ein α-SiC-Submikronpulver mit einer spezifischen Oberfläche von 15,8 m²/g, entsprechend einer mittleren Teilchengrösse von 0,12 μm, ein handelsübliches pulverförmiges Phenolformaldehydharz vom Novolak-Typ, ein Aluminiumnitrid-Submikronpulver mit einer spezifischen Oberfläche von 11,0 m²/g sowie Aceton als Lösungsmittel für das Novolak-Pulver verwendet. Das SiC-Pulver zeigte nach Ergebnissen der röntgenographischen Phasenanalyse einen α-Phasenanteil von 100%. Auf 100 Gewichtsteile des Siliciumcarbidpulvers wurden 2,5 Gewichtsteile Aluminiumnitrid-Pulver (entsprechend einem Aluminiumzusatz von rund 1,5 Gewichtsprozent) und 3,5 Gewichtsteile Novolak-Pulver (entsprechend einem Kohlenstoffzusatz von rund 1 Gewichtsprozent) in Form einer Lösung in Aceton zugesetzt und der dickflüssige Brei solange an der Luft geknetet, bis praktisch das gesamte Lösungsmittel abgedunstet und nur noch ein schwacher Geruch nach Aceton wahrnehmbar war. Auf 100 g SiC-Pulver wurden dabei in der Regel rund 10 ml Novolak-Lösung verwendet und die Knetdauer betrug etwa 60 Minuten. Das nach Beendigung des Knetens erhaltene krümelige Pulver, das sich trocken anfühlte, wurde anschliessend in Gummihülsen unter einem Druck von 2000 bar 2 Minuten lang zu prismatischen Formkörpern der ungefähren Abmessungen 6×6×50 mm mit einer Gründichte von 60 bis 62% der theoretischen Dichte (% TD) des Siliciumcarbids verpresst. Hierauf wurden die Grünlinge in einem Graphittiegel, der in die Heizzone eines Graphitrohrofens vom Tammann-Typ eingesetzt war, bei 2150°C in einer strömenden Argon-Schutzgasatmosphäre unter einem Druck von etwa 1,01 bar gesintert. Vor dem Aufheizen wurde der Ofenraum mehrmals mit gereinigtem Argongas gespült. Die Sinterung erfolgte nach folgendem Temperaturschema:
20°C bis 400°C: 30 min
400°C bis 1400°C: 25 min
Halten bei 1400°C: 30 min
1400°C bis 2150°C: 30 min
Halten bei 2150°C: 15 min.
Nach Beendigung der Haltezeit wurde der Ofen abgeschaltet und die Sinterkörper im Ofen auf Raumtemperatur abgekühlt. Die Sinterkörper erfuhren eine 16%ige lineare Schrumpfung, bezogen auf die Länge der ungesinterten Grünlinge und zeigten eine Dichte von durchschnittlich 3,156 g/cm³ entsprechend 98,3% der theoretischen Dichte des Siliciumcarbids (Dichte von reinem SiC: 3,21 g/cm³). Die Analyse ergab einen Gesamtkohlenstoffgehalt von 30,8%, einen Aluminiumgehalt von 1,19%, einen Stickstoffgehalt von 2500 ppm, und einen Sauerstoffgehalt von 400 ppm. Die Gefügeuntersuchung zeigt eine mittlere SiC-Korngrösse von 5 μm und in sehr

kleinen Mengen homogen verteilten Kohlenstoff mit einer Teilchengrösse $\leq 1$ μm. In Tabelle 2 sind die Biegebruchfestigkeiten der auf die Endabmessungen $3 \times 3 \times 35$ mm geschliffenen Probekörper in Abhängigkeit von der Prüftemperatur zusammengestellt. Die Biegebruchfestigkeit wurde nach der Dreipunktmethode bei einer Auflageweite von 25 mm gemessen.

Tabelle 2: Ergebnisse der Biegebruchfestigkeitsprüfung (Mittelwerte aus 5 Messungen)

| Prüftemperatur °C | Biegebruchfestigkeit N/mm² |
|---|---|
| 20 | 560 |
| 1 000 | 590 |
| 1 200 | 620 |
| 1 400 | 640 |
| 1 600 | 630 |

Die Bruchfläche der Prüfstäbchen zeigte durchwegs transkristallines Aussehen.

Beispiele 2–5
Als SiC-Pulver wurde ein aus der Aufbereitung der grosstechnischen SiC-Feinkornfraktionen gewonnenes Submikronpulver mit einer Phasenzusammensetzung 97 Gew.-% α-SiC und 3 Gew.-% β-SiC mit einer spezifischen Oberfläche von 19,3 m²/g, als Kohlenstoff enthaltender Zusatz ein Phenolharz der Resolstufe A in einer Menge entsprechend 2 Gew.-% C bezogen auf die eingesetzte SiC-Menge, als Aluminium enthaltender Zusatz alternativ elementares Aluminium, Aluminiumnitrid, Aluminiumcarbid und Aluminiumsiliciumcarbid in einer jeweiligen Menge entsprechend 1 Gew.-% Al bezogen auf die eingesetzte SiC-Menge und Aceton als Lösungsmittel verwendet (= Versuchsserie «A»). In der Versuchsserie «B» wurden die gleichen Ansätze hergestellt, mit der Abänderung, dass als Kohlenstoff enthaltender Zusatz Gasruss mit einer spezifischen Oberfläche von 150 m²/g anstelle des Phenolharzes verwendet wurde. In einer weiteren Vesuchsserie «C» wurden dieselben Ausgangsmaterialien wie in Versuchsserie «A» mit Ausnahme des Kohlenstoff enthaltenden Zusatzes verwendet, das heisst, die Versuchsserie «C» enthielt keinen erfindungsgemäss notwendigen Kohlenstoffzusatz.

Die Homogenisierung der Pulvermischungen aller Versuchsserien und die Grünlingsherstellung wurde wie in Beispiel 1 beschrieben, durchgeführt. Die erhaltenen Kaltpresslinge mit Gründichten von über 60% der theoretischen Dichte des SiC wurden vor der Sinterung in einem Trockenschrank in Gegenwart von Luft 60 Minuten lang auf 110°C erwärmt. Nach dem Abkühlen konnten nur die Grünlinge der Serie «A» einer mechanischen Nachbearbeitung unterzogen werden; die der Versuchsserie «B» und «C» wiesen hierzu keine ausreichende Grünfestigkeit auf. Anschliessend wurden alle Grünlinge, wie in Beispiel 1 beschrieben, bei 2150°C in einer Argonatmosphäre gesintert. Die Ergebnisse der Serien sind in Tabelle 3 zusammengestellt:

Tabelle 3:

| Beispiel Nr. | Al-haltiger Zusatz Gew.-% | Teilchengrösse μm | Sinterdichten in % TD | | |
|---|---|---|---|---|---|
| | | | Serie «A» | «B» | «C» |
| 2 | 1 % Al | <5 | 98,6 | 97,2 | 75,1 |
| 3 | 1,7 % Al$_4$SiC$_4$ | <3 | 97,0 | 97,1 | 69,9 |
| 4 | 1,3 % Al$_4$C$_3$ | <1 | 97,5 | 97,4 | 72,2 |
| 5 | 1,5 % AlN | <1 | 98,3 | 98,1 | 79,8 |

Diese Ergebnisse zeigen, dass das erfindungsgemässe Verfahren unabhängig von der Art des Aluminium und Kohlenstoff enthaltenden Zusatzes durchgeführt werden kann und dass mit den Al-enthaltenden Zusätzen allein, d.h. ohne gleichzeitigem C-Zusatz nur eine mangelhafte Verdichtung erhalten wird.

Beispiele 6–11
Es wurde von einem einphasigen α-SiC-Submikronpulver (100% α-Phasenanteil) mit einer spezifischen Oberfläche von 14,7 m²/g ausgegangen. Aus diesem wurden in den Beispielen 6–8 Mischungen mit verschiedenen Mengen an C-Zusatz (siehe Tabelle 4) hergestellt, wobei der C-Zusatz, wie in Beispiel 1 beschrieben, in Form der Lösung des Phenolformaldehyd-Novolaks in Aceton eingebracht wurde. Auch die Grünlingsherstellung und die Sinterung erfolgte unter den gleichen Bedingungen wie in Beispiel 1 angegeben. In den Beispielen 9–11 wurde unter gleichen Bedingungen gearbeitet, jedoch mit der Abänderung, dass die Puvlermischungen einen konstanten zusätzlichen Gehalt von 0,75 Gew.-% Aluminummetall, bezogen auf die eingesetzte SiC-Menge, aufwiesen. Die Ergebnisse dieser Versuche sind in Tabelle 4 zusammengestellt.

Tabelle 4:

| Beispiel Nr. | C-Zusatz Gew.-% | Al-Zusatz Gew.-% | Sinterdichte % TD |
|---|---|---|---|
| 6 | 0,5 | kein | 69,8 |
| 7 | 1,5 | kein | 80,1 |
| 8 | 3,0 | kein | 75,2 |
| 9 | 0,5 | 0,75 | 98,0 |
| 10 | 1,5 | 0,75 | 98,7 |
| 11 | 3,0 | 0,75 | 97,5 |

Die Ergebnisse zeigen, dass bei dem erfindungsgemässen Verfahren ohne Verwendung eines Aluminium enthaltenden Zusatzes keine ausreichende Verdichtung erzielt wird.

Beispiele 12–15
Beispiel 1 wurde wiederholt, mit den Abänderungen, dass ein α-SiC-Pulver der Korngrösse feiner 3 μm und als Al enthaltender Zusatz 1 Gew.-% Aluminiummetallpulver und als Kohlenstofflieferant Novolakpulver in einer Menge entsprechend 0,75 Gew.-% C, bezogen auf die eingesetzte SiC-Menge, verwendet wurde und die Sintertemperatur und Sinteratmosphäre variiert wurden. Die Ergebnisse sind in Tabelle 5 zusammengestellt.

Tabelle 5:

| Beispiel Nr. | Sintertemperatur °C | Sinteratmosphäre | Sinterdichte % TD | Biegebruchfestigkeit in N/mm² bei | | Analyse der Sinterkörper | | | |
|---|---|---|---|---|---|---|---|---|---|
| | | | | 20°C | 1370°C | Gew.-% Al | % C* | ppm O | ppm N |
| 12 | 2050 | Argon** | 98,9 | 530 | 630 | 0,67 | 30,6 | 500 | 400 |
| 13 | 2250 | Argon | 98,5 | 580 | 595 | 0,74 | 30,7 | 400 | 300 |
| 14 | 2050 | Vakuum*** | 98,7 | 519 | 610 | 0,70 | 30,5 | <100 | <50 |
| 15 | 2250 | Vakuum | 97,1 | 501 | 522 | 0,71 | 30,6 | <100 | <50 |

*... Gesamtkohlenstoffgehalt (Gew.-% C)
**... Normaldruck = 1,01 bar
***... ca. 10 Torr = 13,3 mbar

Wie aus Tabelle 5 hervorgeht, werden sowohl bei Verwendung einer Sintertemperatur von 2050°C als auch bei der vergleichsweise hohen Sintertemperatur von 2250°C und unabhängig von der Wahl der Sinteratmosphäre (Schutzgas/Vakuum) Sinterkörper mit einem SiC-Gehalt von über 98,5 Gew.-% erhalten, die Kalt- und Warmfestigkeiten über 500 N/mm² aufwiesen. Die Abbildungen 3 und 4 zeigen das homogene Gefüge der mit siedender alkalischer Ferricyanidlösung geätzten Anschliffe der Sinterkörper aus den Beispielen 12 und 13. Trotz Steigerung der Sintertemperatur um 200°C trat im wesentlichen keine Kornvergröberung ein.

**Patentansprüche**

1. Polykristalliner Formkörper mit einer Dichte von mindestens 97% der theoretischen Dichte des Siliciumcarbids, bestehend aus
mindestens   95,4 Gew.-% α-Siliciumcarbid,
0,1 bis 2,0 Gew.-% zusätzlichem Kohlenstoff, der mindestens teilweise in freier, elementarer Form vorliegt,
0,2 bis 2,0 Gew.-% Aluminium,
bis zu   0,5 Gew.-% Stickstoff und
bis zu   0,1 Gew.-% Sauerstoff,
wobei das α-Siliciumcarbid in Form eines homogenen Gefüges mit Korngrössen von maximal 10 μm vorliegt, mit einer Biegebruchfestigkeit bis zu 1600°C von mindestens 500 N/mm² und mit einem transkristallinen Bruchmodus.
2. Polykristalline Formkörper gemäss Anspruch 1 mit einer Gesamtporosität von maximal 2 Vol.-%.
3. Verfahren zur Herstellung der polykristallinen Formkörper gemäss Anspruch 1 und 2 aus Siliciumcarbid durch drucklose Sinterung von pulverförmigem Siliciumcarbid und mindestens einem Kohlenstoff enthaltenden Zusatz, dadurch gekennzeichnet, dass im wesentlichen in der α-Modifikation vorliegendes Siliciumcarbid in Pulverform mit einer Korngrösse von 3 μm und feiner mit einem Aluminium enthaltenden Zusatz in einer 0,3 bis 3 Gew.-% freiem Aluminium entsprechenden Menge, bezogen auf das Gewicht des eingesetzten Siliciumcarbids, und mit einem Kohlenstoff enthaltenden Zusatz in Form von amorphem Kohlenstoff oder einem bei Temperaturen bis zu etwa 1000°C unter Bildung von amorphem Kohlenstoff verkokbarem Material in einer 0,2 bis 3 Gew.-% freiem Kohlenstoff entsprechenden Menge, bezogen auf das Gewicht des eingesetzten Siliciumcarbids, homogen vermischt, unter Formgebung kalt verpresst wird, und die so erhaltenen vorgeformten Körper mit einer Dichte von mindestens 50% der theoretischen Dichte des Siliciumcarbids anschliessend in Gegenwart einer gegenüber Siliciumcarbid inerten Atmosphäre oder im Vakuum bei einer Temperatur von 2000° bis 2300°C bis zur Bildung der polykristallinen Formkörper gesintert werden.
4. Verfahren nach Anspruch 3, dadurch gekennzeichnet, dass ein ausschliesslich in der α-Modifikation vorliegendes Siliciumcarbidpulver verwendet wird.
5. Verfahren nach Anspruch 3 und 4, dadurch gekennzeichnet, dass ein mit Stickstoff und/oder Aluminium dotiertes Siliciumcarbidpulver verwendet wird.
6. Verfahren nach Anspruch 3 bis 5, dadurch gekennzeichnet, dass ein Siliciumcarbidpulver mit einer spezifischen Oberfläche von 5 bis 50 m²/g verwendet wird.
7. Verfahren nach Anspruch 3, dadurch gekennzeichnet, dass der Aluminium enthaltende Zusatz in Pulverform mit einer Korngrösse von 5 μm und feiner eingesetzt wird.
8. Verfahren nach Anspruch 7, dadurch gekennzeichnet, dass der Aluminium enthaltende Zusatz als Aluminiummetall oder als Aluminiumverbindung eingesetzt wird.

9. Verfahren nach Anspruch 8, dadurch gekennzeichnet, dass als Aluminiumverbindung Aluminiumcarbid, Aluminiumnitrid und/oder Aluminiumsiliciumcarbid verwendet wird.

10. Verfahren nach Anspruch 3, dadurch gekennzeichnet, dass als Kohlenstoff enthaltender Zusatz Russ mit einer spezifischen Oberfläche von 10 bis 40 m²/g verwendet wird.

11. Verfahren nach Anspruch 3, dadurch gekennzeichnet, dass als Kohlenstoff enthaltender Zusatz ein Phenol-Formaldehyd-Kondensationsprodukt oder Steinkohlenteerpech verwendet wird.

12. Verfahren nach Anspruch 3 und 11, dadurch gekennzeichnet, dass die vorgeformten Körper vor der Sinterung einer Wärmebehandlung bei Temperaturen im Bereich von 80° bis 150°C unterzogen werden.

13. Verfahren nach Anspruch 3, dadurch gekennzeichnet, dass die Sinterung der vorgeformten Körper in einer Schutzgasatmosphäre bei Normaldruck durchgeführt wird.

14. Verfahren nach Anspruch 3, dadurch gekennzeichnet, dass die Sinterung der vorgeformten Körper im Vakuum bei einem Druck von <20 mbar durchgeführt wird.

**Patent Claims**

1. Polycrystalline shaped articles having a density of at least 97% of the theoretical density of silicon carbide,

consisting of at least 95.4% by weight of $\alpha$-silicon carbide,

approximately 0.1 to 2.0% by weight of additional carbon which is at least partially present in a free, elemental form,

approximately 0.2 to 2.0% by weight of aluminium,

up to 0.5% by weight of nitrogen, and

up to 0.1% by weight of oxygen, the $\alpha$-silicon carbide being in the form of a homogeneous structure with a maximum grain size of 10 $\mu$m, and having a flexural strength up to 1600°C of at least 500 N/mm² and a transcrystalline fracture mode.

2. Polycrystalline shaped articles according to claim 1 having a maximum total porosity of 2% by volume.

3. Process for the manufacture of the polycrystalline shaped articles according to claims 1 and 2 from silicon carbide by pressureless sintering of pulverulent silicon carbide and at least one carbon-containing additive, characterized in that pulverulent silicon carbide substantially in the form of the $\alpha$-modification and having a grain size of 3 $\mu$m and finer, mixed homogeneously with an aluminium-containing additive in a quantity corresponding to 0.3 to 3% by weight of free aluminium, based on the weight of the silicon carbide used, and with a carbon-containing additive in the form of amorphous carbon or a material that can be coked at temperatures of up to approximately 1000°C to form amorphous carbon, in a quantity corresponding to 0.2 to 3% by weight of free carbon, based on the weight of the silicon carbide used, is cold-pressed while being shaped, and the pre-shaped articles so obtained, having a density of at least 50% of the theoretical density of silicon carbide, are then sintered in the presence of an atmosphere that is inert toward silicon carbide or in vacuo at a temperature of 2000° to 2300°C until the polycrystalline shaped articles are formed.

4. Process according to claim 3, characterized in that silicon carbide powder exclusively in the form of the $\alpha$-modification is used.

5. Process according to claims 3 and 4, characterized in that a silicon carbide powder doped with nitrogen and/or aluminium is used.

6. Process according to claims 3 to 5, characterized in that a silicon carbide powder having a specific surface area of 5 to 50 m²/g is used.

7. Process according to claim 3, characterized in that the aluminium-containing additive is used in powder form having a grain size of 5 $\mu$m and finer.

8. Process according to claim 7, characterized in that the aluminium-containing additive is used as an aluminium metal or as an aluminium compound.

9. Process according to claim 8, characterized in that aluminium carbide, aluminium nitride and/or aluminium silicon carbide is used as the aluminium compound.

10. Process according to claim 3, characterized in that carbon black having a specific surface area of 10 to 400 m²/g is used as the carbon-containing additive.

11. Process according to claim 3, characterized in that a phenol/formaldehyde condensation product or coal-tar pitch is used as the carbon-containing additive.

12. Process according to claims 3 and 11, characterized in that the pre-shaped articles are subjected to thermal treatment at temperatures in the range of from 80° to 150°C before being sintered.

13. Process according to claim 3, characterized in that the sintering of the pre-shaped articles is carried out in a protective gas atmosphere at normal pressure.

14. Process according to claim 3, characterized in that the sintering of the pre-shaped articles is carried out in vacuo at a pressure of <20mbar.

**Revendications**

1. Objets moulés polycristallins ayant une densité d'au moins 97% par rapport à la densité théorique du carbure de silicium, constitué:

d'au moins 95,4% en poids de carbure de silicum $\alpha$,

de 0,1 à 2,0% en poids de carbone supplémentaire, lequel peut se trouver au moins partiellement à l'état élémentaire libre,

de      0,2 à 2,0% en poids d'aluminium,
d'au plus    0,5% en poids d'azote et
d'au plus    0,1% en poids d'oxygène,
le carbure de silicium α étant sous la forme d'une structure homogène ayant des granularités d'au plus 10 μm, avec une résistance à la rupture sous flexion d'au moins 500 N/mm² jusqu'à 1600°C et avec un mode de rupture transcristallin.

2. Objets moulés polycristallins selon la revendication 1 qui ont une porosité totale d'au plus 2% en volume.

3. Procédé de fabrication d'objets moulés polycristallins selon l'une des revendications 1 et 2, à partir de carbure de silicium, par frittage sans pression d'un carbure de silicium pulvérulent et d'au moins un additif contenant du carbone, procédé caractérisé en ce qu'on moule par compression à froid, en donnant la forme, du carbure de silicium pulvérulent essentiellement sous la modification α, d'une granularité d'au plus 3 μm, avec un additif contenant de l'aluminium en une quantité correspondant à une teneur en aluminium libre de 0,3 à 3% en poids par rapport au poids du carbure de silicium mis en jeu, et avec un additif contenant du carbone sous la forme de carbone amorphe ou d'une matière cokéfiable à des températures d'au plus environ 1000°C avec formation de carbone amorphe, en une quantité correspondant à une teneur en carbone libre de 0,2 à 3% en poids par rapport au poids du carbure de silicium mis en jeu, ces constituants étant intimement mélangés, puis on fritte les objets prémoulés ainsi obtenus, qui ont une densité d'au moins 50% de la densité théorique du carbure de silicium, en présence d'une atmosphère inerte à l'égard du carbure de silicium ou sous pression réduite, à une température de 2000 à 2300°C, jusqu'à formation des objets moulés polycristallins.

4. Procédé selon la revendication 3, caractérisé en ce qu'on utilise une poudre de carbure de silicium qui se trouve exclusivement sous la modification α.

5. Procédé selon l'une des revendications 3 et 4, caractérisé en ce qu'on utilise une poudre de carbure de silicium dopée par de l'azote et/ou de l'aluminium.

6. Procédé selon l'une quelconque des revendications 3 à 5, caractérisé en ce qu'on utilise une poudre de carbure de silicium ayant une surface spécifique de 5 à 50 m²/g.

7. Procédé selon la revendication 3, caractérisé en ce que l'additif contenant de l'aluminium est mis en jeu sous une forme pulvérulente ayant une granularité de 5 μm ou moins.

8. Procédé selon la revendication 7, caractérisé en ce que l'additif contenant de l'aluminium est mis en jeu sous la forme d'aluminium métallique ou sous la forme d'un composé de l'aluminium.

9. Procédé selon la revendication 8, caractérisé en ce qu'on utilise, comme composé de l'aluminium, du carbure d'aluminium, du nitrure d'aluminium et/ou du carbure d'aluminium-silicium.

10. Procédé selon la revendication 3, caractérisé en ce qu'on utilise, comme additif contenant du carbone, du noir de carbone ayant une surface spécifique de 10 à 400 m²/g.

11. Procédé selon la revendication 3, caractérisé en ce qu'on utilise, comme additif contenant du carbone, un produit de condensation phénol-formaldéhyde ou de la poix de goudron de houille.

12. Procédé selon l'une des revendications 3 et 11, caractérisé en ce qu'on soumet les objets prémoulés, avant le frittage, à un traitement à la chaleur à des températures comprises entre 80 et 150°C.

13. Procédé selon la revendication 3, caractérisé en ce que le frittage des objets pré-moulés est effectué dans une atmosphère gazeuse protectrice, sous la pression normale.

14. Procédé selon la revendication 3, caractérisé en ce que le frittage des objets pré-moulés est effectué sous vide, sous une pression inférieure à 2,0 kPa.

Fig. 1

○———○ Heißgepreßte Al-haltige α SiC -Sinterkörper (NC 201, Norton NORALIDE Brochure).

□———□ Heißgepreßte B-haltige β SiC -Sinterkörper mit homogenem, feinkörnigem Gefüge.

▲———▲ Heißgepreßte B-haltige α/β SiC-Sinterkörper mit grobkörnigem Gefüge (S. Prochazka und R. J. Charles in "Fracture Mechanics of Ceramics," R.C. Bradt et al (Hrsg.), Plenum N.Y. (1974), S.579.

△———△ Drucklos gesinterte B-und C-haltige α SiC -Sinterkörper (E.H. Kraft u. G.I. Dooher, Carborundum Comp., II. Int. Conf. Mechanical Behavior of Materials, Aug. 1976 Boston, Mass).

●———● Drucklos gesinterte Al-und C-sowie gegebenenfalls Stickstoff-enthaltende α Si C-Sinterkörper (erfindungsgemäß).

Fig. 2  Schematischer Verfahrensablauf

Fig. 3

Fig. 4

Fig. 5